(19) **Europäisches Patentamt**
**European Patent Office**
**Office européen des brevets**

(11) **EP 2 541 353 B1**

(12) **EUROPEAN PATENT SPECIFICATION**

(45) Date of publication and mention
of the grant of the patent:
**17.12.2014 Bulletin 2014/51**

(51) Int Cl.:
**G05B 19/404** *(2006.01)*      **B23Q 15/24** *(2006.01)*
**B23Q 15/26** *(2006.01)*

(21) Application number: **10846426.4**

(22) Date of filing: **25.02.2010**

(86) International application number:
**PCT/JP2010/001286**

(87) International publication number:
**WO 2011/104757 (01.09.2011 Gazette 2011/35)**

(54) **NUMERIC CONTROL DEVICE**

NUMERISCHE STEUERUNG

DISPOSITIF DE COMMANDE NUMÉRIQUE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**02.01.2013 Bulletin 2013/01**

(73) Proprietor: **Mitsubishi Electric Corporation
Tokyo 100-8310 (JP)**

(72) Inventors:
• **SATO, Ryuta
Tokyo 100-8310 (JP)**
• **ONO, Shunro
Tokyo 100-8310 (JP)**
• **NAKAMURA, Naoki
Tokyo 100-8310 (JP)**
• **FUJINO, Daisuke
Tokyo 100-8310 (JP)**

(74) Representative: **Hoffmann Eitle
Patent- und Rechtsanwälte PartmbB
Arabellastraße 30
81925 München (DE)**

(56) References cited:
**EP-A2- 2 065 771      EP-A2- 2 221 692
JP-A- 2006 155 530      JP-A- 2008 269 316
JP-A- 2009 009 274      JP-B2- 4 327 894**

## Description

### Technical Field

The present invention relates to a numerical control device which controls a machine tool having a linear axis and a rotary axis, and more particularly to a numerical control device which can perform accurate machining by correcting influences of errors possessed by the linear axis and the rotary axis.

### Background Art

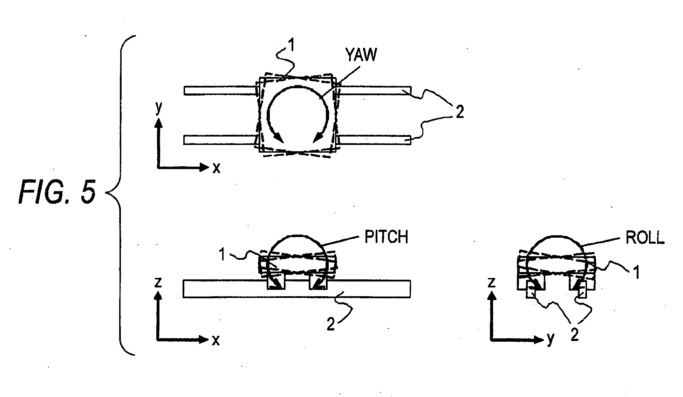

First, an attitude error caused by movement of a linear axis will be described with reference to Fig. 5. When a table 1 which is constrained in a movement direction by a guiding section 2, and which is moved in the X-axis direction will be considered, it is known that an attitude error (yaw) rotating about the Z-axis, an attitude error (pitch) rotating about the Y-axis, and an attitude error (roll) rotating about the X-axis exist in addition to a translation error in the X-axis direction, that in the Y-axis direction, and that in the Z-axis direction. The translation errors in the directions are constant regardless of the distance from a reference point on the table 1. However, influences due to the attitude errors differ depending on the distance from the reference point, and hence correction thereof is further difficult to perform.

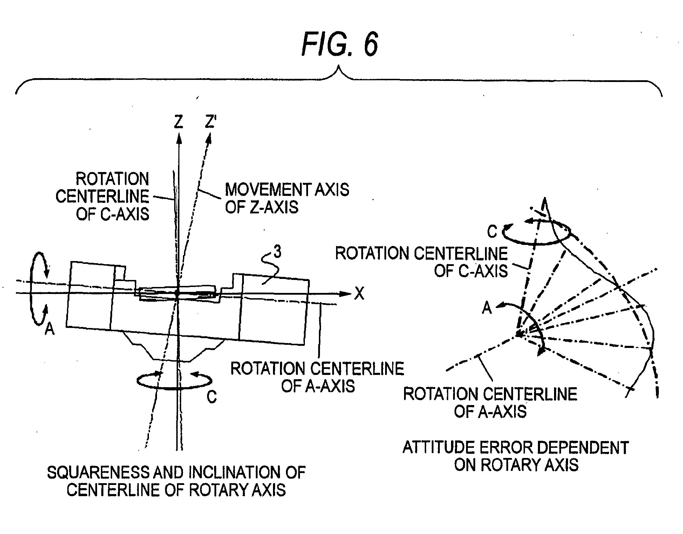

A squareness error and an inclination of the centerline of a rotation axis will be described with reference to Fig. 6. For example, the relationship between the X-axis and the Z-axis will be considered. Ideally, it is preferable that the axes are completely orthogonal to each other. As shown in the left figure of Fig. 6, however, there is actually a squareness error caused by influences such as an assembly error. When such a squareness error exists, a translation error caused by movement of a linear axis occurs. Similarly, because of influences of an assembly error of an inclined rotary table 3 and the like, a parallelism error exists also in the A-axis rotation centerline which should be originally parallel to the X-axis and the C-axis rotation centerline which should be originally parallel to the Z-axis. When such errors exist, translation and attitude errors due to movement of the rotary axis occur. As shown in the right figure of Fig. 6, because of influences of bearings which constrain movement of the A-axis and the like, when the A-axis is rotated, a phenomenon that the direction of the C-axis rotation centerline fluctuates is occasionally observed, so that translation and attitude errors due to movement of the rotary axis are caused.

A method has been proposed in which, in the case where the position of the rotary axis center is deviated or inclined from the original position, or where the turning center of the spindle is deviated or inclined from the original position, the tool orientation is corrected by using two rotary axes, and the tool end point position is corrected by using three linear axes (for example, see Patent Reference 1).

Another method has been proposed in which the amount of a translation error amount occurring at the tool end point position is calculated from translation and rotation errors which are dependent on the linear axes and translation and rotation errors which are dependent on the rotary axes, and two rotary axes are driven to commanded angles and three linear axes are driven to positions which are corrected by the degree corresponding to the translation error amount (for example, see Patent Reference 2).

### Prior Art Reference

### Patent References

Patent Reference 1: Japanese Patent No. 4,038,185
Patent Reference 2: Japanese Patent No. 4,327,894

### Disclosure of Invention

### Technical Problem

In the error correction method disclosed in Patent Reference 1, however, the translation and attitude errors of the tool end point position which are caused by a deviation or inclination of the position of the rotary axis center can be corrected, but cannot be expressed as the deviation or inclination of the center position. For example, influences due to errors such as shown in the right side of Fig. 6 cannot be corrected. Since the attitude errors in three directions are corrected by using two rotary axes, there is a possibility that the rotary axes move beyond the expectation of the operator depending on the directions of the attitude errors. Also in the case where the same shape is to be processed by a machine having the same axis configuration, movement is performed in a thoroughly different manner depending on the directions of the attitude errors. There is a further problem in that translation and attitude errors which are dependent on the linear axes cannot be corrected.

In the error correction method disclosed in Patent Reference 2, misalignment of the tool end point position due to the translation and rotation errors which are dependent on the linear axes and the translation and rotation errors which are dependent on the rotary axes can be corrected. However, attitude errors are not thoroughly corrected because the rotary axes are driven to commanded angles.

The invention has been conducted in view of the above-discussed problems. It is an object of the invention to provide a numerical control device in which, while moving the tool end point position to an errorless position, the tool attitude in a direction where correction can be easily performed is kept to an errorless attitude, whereby accurate machining can be realized.

**Means for solving the problem**

The above object is achieved by the independent claims. Advantageous embodiments are described in the dependent claims. The numerical control device of an exemplary embodiment of the present invention is a numerical control device which numerically controls a machine tool having a linear axis and a rotary axis, the numerical control device comprising: a rotary axis dependent position correction amount calculating unit which calculates a position correction amount of the linear axis from a translation error and an attitude error that are dependent on movement of the rotary axis; a rotary axis angle correction amount calculating unit which calculates an angle correction amount of the rotary axis from a part of the attitude error that is dependent on movement of the rotary axis; and a position addition correction amount calculating unit which calculates a position correction amount of the linear axis corresponding to the rotary axis correction amount.

Further, the numerical control device of an exemplary embodiment of the present invention is a numerical control device which numerically controls a machine tool having a linear axis and a rotary axis, the numerical control device comprising: a linear axis dependent position correction amount calculating unit which calculates a position correction amount of the linear axis from a translation error and an attitude error that are dependent on movement of the linear axis; a rotary axis angle correction amount calculating unit which calculates an angle correction amount of the rotary axis from a part of the attitude error that is dependent on movement of the linear axis; and a position addition correction amount calculating unit which calculates a position correction amount of the linear axis corresponding to the rotary axis correction amount.

Further, the numerical control device of an exemplary embodiment of the present invention is a numerical control device which numerically controls a machine tool having a linear axis and a rotary axis, the numerical control device comprising: a linear axis dependent position correction amount calculating unit which calculates a position correction amount of the linear axis from a translation error and an attitude error that are dependent on movement of the linear axis; a rotary axis dependent position correction amount calculating unit which calculates a position correction amount of the linear axis from a translation error and an attitude error that are dependent on movement of the rotary axis; a rotary axis angle correction amount calculating unit which calculates an angle correction amount of the rotary axis from a part of the attitude error that is dependent on movement of the linear axis and a part of the attitude error that is dependent on movement of the rotary axis; and a position addition correction amount calculating unit which calculates a position correction amount of the linear axis corresponding to the rotary axis correction amount.

**Advantageous Effects**

According to the invention, it is possible to provide a numerical control device in which, while moving the tool end point position to an errorless position, the tool attitude in a direction where correction can be easily performed is kept to an errorless attitude, whereby accurate machining can be realized.

**Brief Description of Drawings**

Fig. 1 is a configuration diagram of a numerical control device of Embodiment 1 of the invention.
Fig. 2 is a diagram illustrating a rotary table type five-axis machine tool to which the invention is applied.
Fig. 3 is a diagram illustrating a mixed type five-axis machine tool to which the invention is applied.
Fig. 4 is a diagram illustrating a rotary spindle head type five-axis machine tool to which the invention is applied.
Fig. 5 is a diagram illustrating an attitude error depending on movement of a linear axis.
Fig. 6 is a diagram illustrating a squareness error and an inclination of the centerline of a rotary axis.

**Best Mode for Carrying Out the Invention**

Embodiment 1

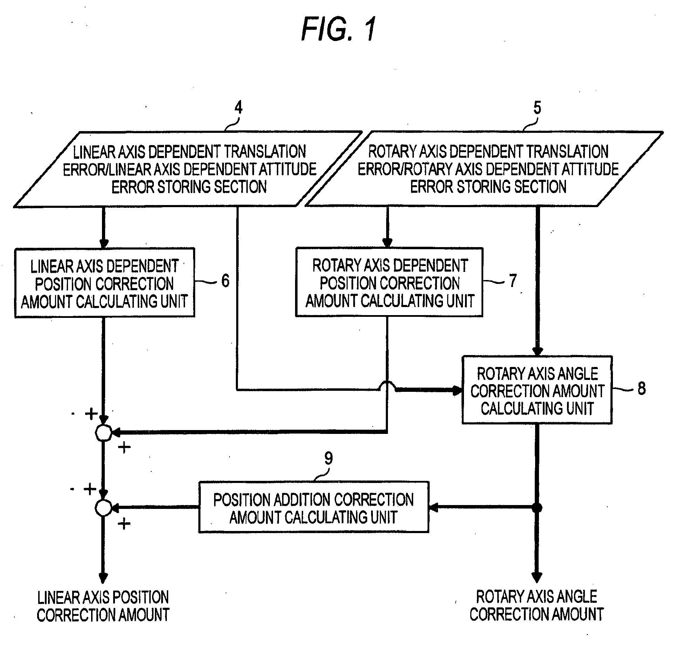

Hereinafter, Embodiment 1 of the invention will be described with reference to Figs. 1 to 4. Fig. 1 is a configuration diagram of a place where linear axis position correction amounts and rotary axis angle correction amounts in a numerical control device of Embodiment 1 are calculated. The hardware configuration of the numerical control device of Embodiment 1 is a general one configured by a CPU, memories, and the like, and components (a linear axis dependent position correction amount calculating unit 6, a rotary axis dependent position correction amount calculating unit 7, a rotary axis angle correction amount calculating unit 8, a position addition correction amount calculating unit 9, and the like) other than storing sections (memories) 4, 5 are mainly configured by software.

Referring to Fig. 1, the linear axis dependent translation error/linear axis dependent attitude error storing section 4 (hereinafter, referred to as the linear axis dependent error storing section) stores translation and attitude errors which are dependent on movement of linear axes, as numerical data corresponding to commanded positions of the linear axes. It is known that, in a machine having three linear axes (the X-axis, the Y-axis, and the Z-axis), six components of xtx, xty, xtz, xrx, xry, and xrz exist as error components which are dependent on movement of the X-axis. Here, xtx indicates a translation error in the X-axis direction due to movement of the X-axis, and xty indicates a translation error in the Y-axis direction due to movement of the X-axis. The unit of a translation error is meter. Moreover, xrx indicates an attitude error (roll) about the X-axis due to movement of the X-axis, and xry indicates an attitude error (pitch) about the Y-axis due to movement of the X-axis. The unit of an attitude error is radian.

Similarly, an error of six components of ytx, yty, ytz, yrx, yry, and yrz exists with respect to the Y-axis, and that of six components of ztx, zty, ztz, zrx, zry, and zrz exists with respect to the Z-axis. In addition, there are a squareness error ywx existing between the Z-axis and the Y-axis, a squareness error zwy existing between the Y-axis and the Z-axis, and a squareness error zwx existing between the Z-axis and the X-axis. Therefore, the errors which are dependent on movement of the linear axes have 21 components in total. An attitude error which is dependent on movement of a linear axis is defined as a relative angular error between a workpiece and a tool.

The rotary axis dependent translation error/rotary axis dependent attitude error storing section 5 (hereinafter, referred to as the rotary axis dependent error storing section) stores translation and attitude errors which are dependent on movement of rotary axes, as numerical data corresponding to commanded angles of the rotary axes. In a machine having only one rotary axis or a C-axis rotating about the Z-axis, for example, six components of ctx, cty, ctz, crx, cry, and crz exist as error components which are dependent on movement of the C-axis, in a similar manner as the case of a linear axis. The C-axis means the rotation centerline of the C-axis. Therefore, ctx indicates a translation error of the rotation center position in the X-axis direction due to rotation of the C-axis, and cty indicates a translation error of the rotation center position in the Y-axis direction due to rotation of the C-axis. The unit of a translation error is meter, and defined on the mechanical coordinate system fixed to the mechanical origin. Furthermore, crx indicates an attitude error of the rotation centerline about the X-axis due to rotation of the C-axis, and cry indicates an attitude error of the rotation centerline about the Y-axis due to rotation of the C-axis. The unit of an attitude error is radian, and defined on the mechanical coordinate system fixed to the mechanical origin.

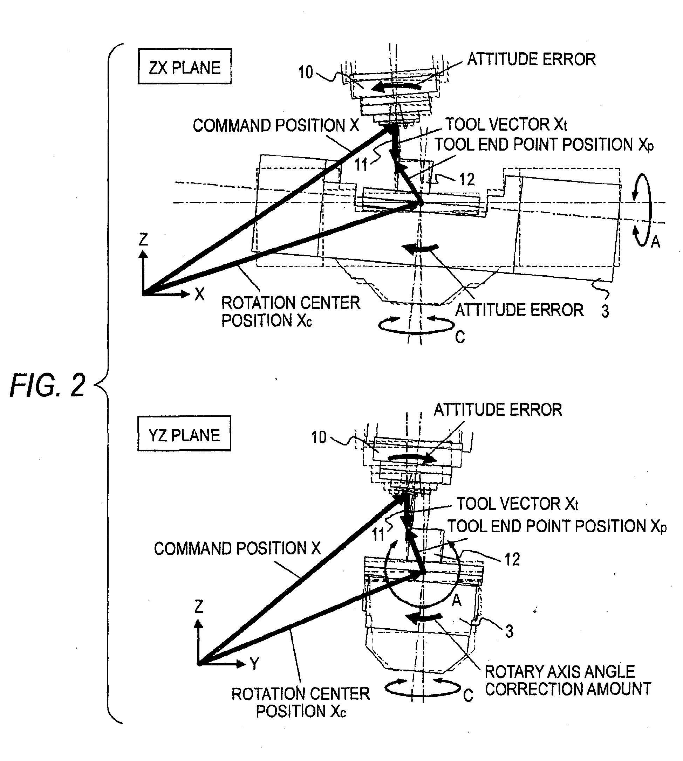

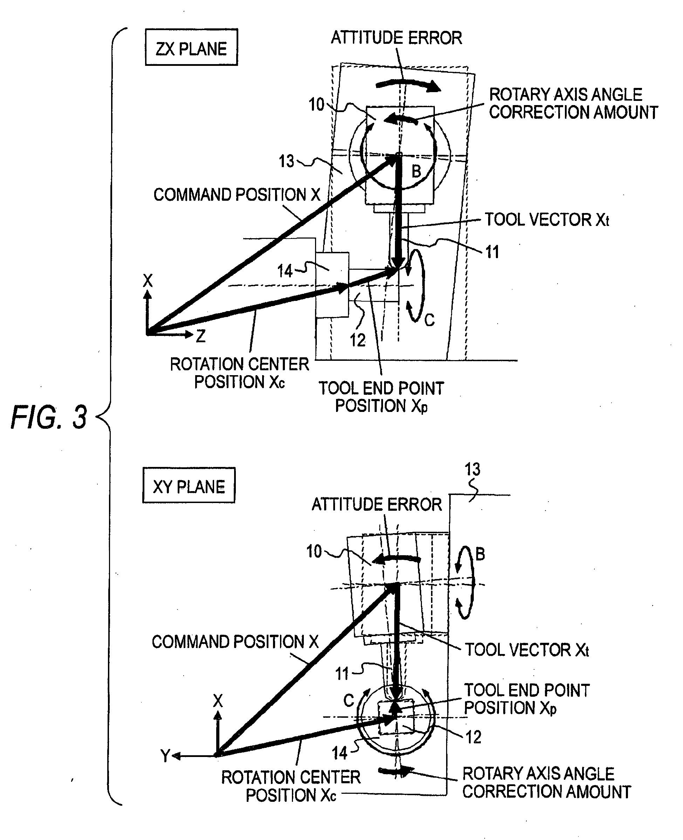

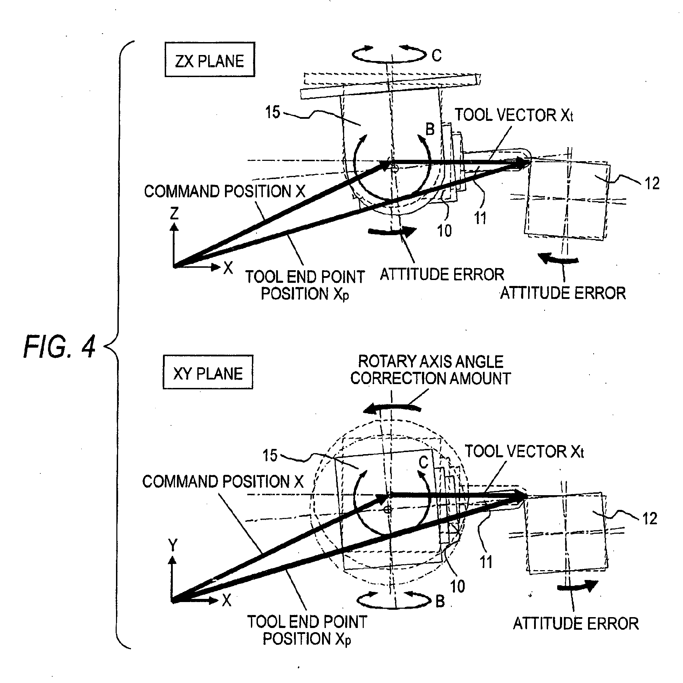

A numerical control machine tool having three linear axes and two rotary axes is called, for example, a five-axis machine tool, and widely used in industry. Five-axis machine tools are roughly classified into three groups depending on whether the two rotary axes are placed on the tool side or on the workpiece side. In the first group, as shown in Fig. 2, for example, the two rotary axes are placed on the workpiece side. The group is called "rotary table type". In the second group, as shown in Fig. 3, for example, one rotary axis is placed on the tool side, and the other rotary axis is placed on the workpiece side. The group is called "mixed type" or "rotary spindle head/rotary table type". In the third, as shown in Fig. 4, for example, the two rotary axes are placed on the tool side. The group is called "rotary spindle head type".

In Figs. 2 to 4, 3 denotes an inclined rotary table, 10 denotes a spindle head, 11 denotes a tool, 12 denotes a workpiece, 13 denotes a column, 14 denotes a chuck, and 15 denotes a universal head.

In the case of the rotary table type shown in Fig. 2, the direction of the C-axis rotation centerline is changed in accordance with the rotation angle of the A-axis, and therefore also translation and attitude errors due to rotation of the C-axis are affected by rotation of the A-axis. Also in the case of the rotary spindle head type shown in Fig. 4, similarly, the direction of the B-axis rotation centerline is changed in accordance with the rotation angle of the C-axis, and therefore translation and attitude errors due to rotation of the B-axis are affected by rotation of the C-axis. In such a case, translation and angular errors which are dependent on movement of rotary axes are preferably set as a two-dimensional table of movement of two rotary axes. Namely, rtx, rty, rtz, rrx, rry, and rrz are set as translation and attitude errors of the centerline of the rotation axis which is on the side close to the workpiece in the case of the rotary table type, or on the side close to the tool in the case of rotary spindle head type. These error components are stored as numerical data corresponding to predetermined commanded angles of the two rotary axes.

In the case of the mixed type shown in Fig. 3, by contrast, the two rotary axes are separately placed on the tool side and on the workpiece side, respectively, and therefore the rotation angle of one rotary axis does not affect the direction of the rotation centerline of the other rotary axis. In such a case, translation and attitude errors of each rotary axis are set as numerical data corresponding to a predetermined commanded angle of each rotary axis, such as error components ctx, cty, ctz, crx, cry, and crz which are dependent on rotation of the C-axis, and error components btx, bty, btz, brx, bry, and brz which are dependent on rotation of the B-axis.

In the linear axis dependent position correction amount calculating unit 6, the position error at the tool end point position is calculated from the linear axis dependent translation errors and linear axis dependent attitude errors stored in the linear axis dependent error storing section 4. When the commanded position is indicated by X, and a tool vector is indicated by $X_t$, the position error $E_T$ at the tool end point position which is caused by linear axis dependent translation and attitude errors can be calculated by Expression 1. A linear axis dependent position correction amount is an inversion of the sign of Expression 1.

(Expression 1)

$$\mathbf{E_T} = \mathbf{P} + \mathbf{A}\mathbf{X} + \mathbf{A}_t\mathbf{X}_t$$

where

$$\mathbf{E_T} = \begin{bmatrix} e_{xT} \\ e_{yT} \\ e_{zT} \end{bmatrix}, \quad \mathbf{X} = \begin{bmatrix} x \\ y \\ z \end{bmatrix}, \quad \mathbf{X}_t = \begin{bmatrix} x_t \\ y_t \\ z_t \end{bmatrix}, \quad \mathbf{P} = \begin{bmatrix} xtx + ytx + ztx \\ xty + yty + zty \\ xtz + ytz + ztz \end{bmatrix},$$

$$\mathbf{A}_t = \begin{bmatrix} 0 & -(xrz + yrz + zrz) & xry + yry + zry \\ xrz + yrz + zrz & 0 & -(xrx + yrx + zrx) \\ -(xry + yry + zry) & xrx + yrx + zrx & 0 \end{bmatrix}$$

The matrix A in Expression 1 is changed in accordance with the axis configuration of the linear axes. In the case where all the three linear axes exist on the spindle side, for example, the matrix can be calculated as Expression 2, in the case where the Y-axis exists on the workpiece side and the X- and Z-axes exist on the spindle side, the matrix can be calculated as Expression 3, and, in the case where only the Z-axis exists on the spindle side and the X- and Y-axes exist on the workpiece side, the matrix can be calculated as Expression 4. It is known that, with respect to other axis configurations, similar expressions can be easily derived.

(Expression 2)

$$\mathbf{A} = \begin{bmatrix} 0 & -ywx & zwx \\ 0 & 0 & -zwy \\ 0 & 0 & 0 \end{bmatrix}$$

(Expression 3)

$$\mathbf{A} = \begin{bmatrix} 0 & -ywx & zwx+yry \\ 0 & 0 & -(zwy+yrx) \\ yry & -yrx & 0 \end{bmatrix}$$

(Expression 4)

$$\mathbf{A} = \begin{bmatrix} 0 & -ywx & zwx+xry+yry \\ 0 & 0 & -(zwy+xrx+yrx) \\ xry+yry & -(xrx+yrx) & 0 \end{bmatrix}$$

In the case of the rotary table type, the commanded position X in Expression 1 means the position of the spindle rotation center at the spindle end with respect to the mechanical origin, in the case of the mixed type, means the position (pivot point) of an intersection of the tool rotation axis and the spindle centerline with respect to the mechanical origin, and, in the case of the rotary spindle head type, means the position (pivot point) of an intersection of the two rotation centerlines on the tool side with respect to the mechanical origin. In the case of the rotary table type, the tool vector $X_t$ in Expression 1 means the center position of the tool end point or the end sphere with respect to the position of the spindle rotation center at the spindle end, and, in the case of the mixed type or the rotary spindle head type, means the center position of the tool end point or the end sphere with respect to the pivot point.

In the case where the rotary axes are placed on the tool side, the tool vector $X_t$ is changed in accordance with the rotation angles of the rotary axes. It is known that the tool vector $X_t$ in this case can be calculated from the tool axis vector $X_{t0}$ which is obtained when the commanded angles of the rotary axes are 0 degree. In the case of the mixed type which has the B-axis on the tool side, for example, the tool vector can be calculated by Expression 5, and, in the case of the rotary spindle head type which has the B- and C-axes on the tool side, can be calculated by Expression 6. Here, $\theta_B$ and $\theta_C$ indicate the commanded angles [rad] of the B- and C-axes, respectively.

(Expression 5)

$$\mathbf{X}_t = \begin{bmatrix} x_t \\ y_t \\ z_t \end{bmatrix} = \begin{bmatrix} \cos\theta_B & 0 & \sin\theta_B \\ 0 & 1 & 0 \\ -\sin\theta_B & 0 & \cos\theta_B \end{bmatrix} \begin{bmatrix} x_{t0} \\ y_{t0} \\ z_{t0} \end{bmatrix}$$

(Expression 6)

$$\mathbf{X}_t = \begin{bmatrix} x_t \\ y_t \\ z_t \end{bmatrix} = \begin{bmatrix} \cos\theta_C\cos\theta_B & -\sin\theta_C & \cos\theta_C\sin\theta_B \\ \sin\theta_C\cos\theta_B & \cos\theta_C & \sin\theta_C\sin\theta_B \\ -\sin\theta_B & 0 & \cos\theta_B \end{bmatrix} \begin{bmatrix} x_{t0} \\ y_{t0} \\ z_{t0} \end{bmatrix}$$

In the rotary axis dependent position correction amount calculating unit 7, the position error at the tool end point position is calculated from the rotary axis dependent translation errors and rotary axis dependent attitude errors stored in the rotary axis dependent error storing section 5. When the tool end point position as viewed from the rotation center position is indicated by $X_p$, and the tool vector is indicated by $X_t$, the position error $E_R$ at the tool end point position which is caused by rotary axis dependent translation and attitude errors can be calculated by Expression 7. The prime symbol in the right upper portion indicates that it is an attitude error matrix on the workpiece side.

(Expression 7)

$$\mathbf{E_R} = \mathbf{P_R} + \mathbf{A_R'}\mathbf{X_P} + \mathbf{A_R}\mathbf{X_t}$$

where

$$\mathbf{E_R} = \begin{bmatrix} e_{xR} \\ e_{yR} \\ e_{yR} \end{bmatrix}, \quad \mathbf{X_P} = \begin{bmatrix} x_P \\ y_P \\ z_P \end{bmatrix}$$

From Fig. 2 or 3, it is known that the tool end point position $X_p$ as viewed from the rotation center position in Expression 7 can be calculated as Expression 8 from the commanded position X, the tool vector $X_t$, and the rotation center position $X_c$. Similarly with the case of the linear axis dependent position correction amount, the tool vector $X_t$ can be calculated by, for example, Expression 5 or 6.

(Expression 8)

$$\mathbf{X_P} = \mathbf{X} - \mathbf{X_C} + \mathbf{X_t} = \begin{bmatrix} x - x_c + x_t \\ y - y_c + y_t \\ z - z_c + z_t \end{bmatrix}$$

A translation error matrix $P_R$, an attitude error matrix $A_R'$ on the workpiece side, and an attitude error matrix $A_R$ on the tool side in Expression 7 are expressed by Expression 9 in the case of the rotary table type shown in Fig. 2, by Expression 10 in the case of the mixed type shown in Fig. 3, and by Expression 11 in the case of the rotary spindle head type shown in Fig. 4.

(Expression 9)

$$\mathbf{P_R} = -\begin{bmatrix} rtx \\ rty \\ rtz \end{bmatrix}, \quad \mathbf{A_R'} = -\begin{bmatrix} 0 & -rrz & rry \\ rrz & 0 & -rrx \\ -rry & rrx & 0 \end{bmatrix}, \quad \mathbf{A_R} = \begin{bmatrix} 0 & 0 & 0 \\ 0 & 0 & 0 \\ 0 & 0 & 0 \end{bmatrix}$$

(Expression 10)

$$\mathbf{P_R} = -\begin{bmatrix} rtx \\ rty \\ rtz \end{bmatrix}, \quad \mathbf{A'_R} = -\begin{bmatrix} 0 & -rrz & rry \\ rrz & 0 & -rrx \\ -rry & rrx & 0 \end{bmatrix}, \quad \mathbf{A_R} = \begin{bmatrix} 0 & 0 & 0 \\ 0 & 0 & 0 \\ 0 & 0 & 0 \end{bmatrix}$$

(Expression 11)

$$\mathbf{P_R} = \begin{bmatrix} rtx \\ rty \\ rtz \end{bmatrix}, \quad \mathbf{A'_R} = \begin{bmatrix} 0 & 0 & 0 \\ 0 & 0 & 0 \\ 0 & 0 & 0 \end{bmatrix}, \quad \mathbf{A_R} = \begin{bmatrix} 0 & -rrz & rry \\ rrz & 0 & -rrx \\ -rry & rrx & 0 \end{bmatrix}$$

In the rotary axis angle correction amount calculating unit 8, from the linear axis dependent attitude errors and rotary axis dependent attitude errors stored in the linear axis dependent error storing section 4 and the rotary axis dependent error storing section 5, only an attitude error in a direction where correction can be easily performed in accordance with the axis configuration of the rotary axes of the numerical control machine tool to be controlled is extracted, and a rotary axis angle correction amount is calculated.

Here, the term correction can be easily performed means that the angle correction amount of a rotary axis is limited to an angle at which the movement due to the angle correction amount is not visible by the operator, or that at which the influence to the tool end position by the angle correction amount can be linearly approximated. Because of this, a situation where the machine tool is caused by the angle correction amount to perform movement which exceeds the ability of the operator can be avoided, and the displacement of the tool end point position due to the angle correction amount can be calculated by a linear calculation. Therefore, the embodiment has an effect that the calculation amount can be remarkably reduced.

In a five-axis machine tool, machining is often performed in a state where mechanical clamping is performed in order to fix a rotary axis to a predetermined angle. In this case, when an angle correction amount of the rotary axis exists, there arises a problem in that mechanical clamping is disabled. In this case, the term that correction can be easily performed means also that, with respect to a rotary axis which must be mechanically clamped, an angle correction amount is made zero. Of course, an angle correction amount in a direction where a rotary axis is not disposed is zero.

Hereafter, an example of a specific method of extracting only an attitude error in a direction where correction can be easily performed, and calculating a rotary axis angle correction amount by the rotary axis angle correction amount calculating unit 8 will be described. For example, the rotary table type five-axis machine tool shown in Fig. 2 has the A-axis which is a rotary axis about the X-axis, and the C-axis which is a rotary axis about the Z-axis. In the case of a machine having such an axis configuration, when an attitude error about the Y-axis in a coordinate system fixed to a table is to be corrected, it is required that the C-axis is rotated by 180 degrees and the A-axis is then rotated, and therefore acceleration/deceleration which is rapid movement is caused for only correction of a small attitude error.

Since the direction of the rotation centerline of the C-axis is changed in accordance with the rotation angle of the A-axis, the direction of the attitude error which is made able to be corrected by the rotation of the C-axis is changed in accordance with the rotation angle of the A-axis, and therefore a cumbersome calculation process is required.

In the rotary axis angle correction amount calculating unit 8 in Embodiment 1 of the invention, by using only the A-axis that is a rotary axis in which the direction of the rotation centerline is not changed by the influence of another rotary axis, only a correctable attitude error is extracted and a rotary axis angle correction amount is calculated. In the rotary table type five-axis machine tool shown in Fig. 2, an attitude error which can be corrected by using the A-axis is the attitude error about the X-axis, and therefore the angle correction amount Δa' of the A-axis can be calculated by Expression 12 from a part of the linear axis dependent attitude error and a part of the rotary axis dependent attitude error. In the expression, the prime symbol in the right upper portion indicates that it is an angle correction amount on the workpiece side. In Expression 12, the sign of only rrx, which is one component of the attitude error that is dependent on the rotary axis, is inverted. This is because the attitude error which is dependent on the rotary axis on the workpiece side is defined on the mechanical coordinate system.

(Expression 12)

$$\Delta a' = -(xrx + yrx + zrx - rrx)$$

In the case of the mixed type such as shown in Fig. 3, the direction of the rotation centerline of one rotary axis is not changed by rotation of the other rotary axis. In this case, attitude errors in two directions are corrected by using two rotary axes. The angle correction amount Δb of the B-axis, and the angle correction amount Δc' of the C-axis can be calculated by Expression 13 from a part of the linear axis dependent attitude error and a part of the rotary axis dependent attitude error. In the expression, the prime symbol in the right upper portion indicates that it is an angle correction amount on the workpiece side. The signs of only cry and crz which are attitude errors that are dependent on the C-axis are inverted. This is because the C-axis is placed on the workpiece side.

(Expression 13)

$$\begin{cases} \Delta b = -(xry + yry + zry + bry - cry) \\ \Delta c' = -(xrz + yrz + zrz + brz - crz) \end{cases}$$

In the case of the rotary spindle head type such as shown in Fig. 4, the direction of the rotation centerline of the B-axis is changed in accordance with the rotation angle of the C-axis. Therefore, only the attitude error about the Z-axis which can be corrected by the C-axis is extracted, and a rotary axis angle correction amount is calculated. The angle correction amount Δc of the C-axis can be calculated by Expression 14 from a part of the linear axis dependent attitude error and a part of the rotary axis dependent attitude error.

(Expression 14)

$$\Delta c = -(xrz + yrz + zrz + rrz)$$

The direction of an attitude error in which correction can be easily performed is different depending on the axis configuration of the rotary axes. Therefore, the rotary axis angle correction amount calculating unit 8 determines an attitude error of a direction in which correction can be performed, from axis configuration information of the rotary axes. In order to facilitate the determination, the linear axis dependent error storing section 4 and the rotary axis dependent error storing section 5 may store attitude errors which are dependent on the linear axes and the rotary axes, while classifying the attitude errors in accordance with the direction.

When a rotary axis is rotated by an angle corresponding to the rotary axis angle correction amount calculated by the rotary axis angle correction amount calculating unit 8, a position error is produced at the tool end point position. The position addition correction amount calculating unit 9 calculates a position error $E_{R+}$ of the tool end point position which is caused by the rotary axis angle correction amount. When the angle correction amount with respect to the rotary axis placed on the tool side is indicated by (Δa, Δb, Δc), and the angle correction amount with respect to the rotary axis placed on the workpiece side is indicated by (Δa', Δb', Δc'), the position error $E_{R+}$ of the tool end point position which is caused by the rotary axis angle correction amount can be calculated by following Expression 15 from the tool end point position $X_p$ as viewed from the rotation center position and the tool vector $X_t$. A position addition correction amount is an inversion of the sign of Expression 15. The prime symbol in the right upper portion indicates that it is an angular correction amount matrix of the rotary axis on the workpiece side.

(Expression 15)

$$\mathbf{E_{R+}} = \mathbf{A'_{R+}X_P} + \mathbf{A_{R+}X_t}$$

where

$$\mathbf{E_{R+}} = \begin{bmatrix} e_{xR+} \\ e_{yR+} \\ e_{zR+} \end{bmatrix}, \quad \mathbf{A'_{R+}} = \begin{bmatrix} 0 & -\Delta c' & \Delta b' \\ \Delta c' & 0 & -\Delta a' \\ -\Delta b' & \Delta a' & 0 \end{bmatrix}, \quad \mathbf{A_{R+}} = \begin{bmatrix} 0 & -\Delta c & \Delta b \\ \Delta c & 0 & -\Delta a \\ -\Delta b & \Delta a & 0 \end{bmatrix}$$

In the case of the rotary table type in which a rotary axis is not disposed on the tool side, all the components of the angle correction amount matrix $A_{R+}$ of the rotary axis on the tool side in Expression 15 are zero, and it is assumed that, in the components of the angle correction amount matrix $A'_{R+}$ of the rotary axis on the workpiece side, the components except those in which the value is determined by the rotary axis angle correction amount calculating unit 8 are zero. In the case of the rotary spindle head type in which a rotary axis is not disposed on the workpiece side, all the components of the angle correction amount matrix $A'_{R+}$ of the rotary axis on the workpiece side are zero, and it is assumed that, in the components of the angle correction amount matrix $A_{R+}$ of the rotary axis on the tool side, the components except those in which the value is determined by the rotary axis angle correction amount calculating unit 8 are zero. In the case of the mixed type in which a rotary axis is disposed on both the tool side and the workpiece side, it is assumed that, with respect to both the angle correction amount matrix $A_{R+}$ of the rotary axis on the tool side, and the angle correction amount matrix $A'_{R+}$ of the rotary axis on the workpiece side, the value is determined by the rotary axis angle correction amount calculating unit 8, and the components except those in which the value is determined is zero. Furthermore, the tool end point position $X_p$ is calculated by Expression 8, and the tool vector $X_t$ is calculated by, for example, Expression 5 or Expression 6.

The linear axis position correction amount ($\Delta x \Delta y$, $\Delta z$) is calculated by Expression 16 from the linear axis dependent position correction amount $-E_r$ calculated by the linear axis dependent position correction amount calculating unit 6, the rotary axis dependent position correction amount $-E_R$ calculated by the rotary axis dependent position correction amount calculating unit 7, and the position addition correction amount $-E_{R+}$ calculated by the position addition correction amount calculating unit 9.

(Expression 16)

$$\begin{bmatrix} \Delta x \\ \Delta y \\ \Delta z \end{bmatrix} = -\mathbf{E_T} - \mathbf{E_R} - \mathbf{E_{R+}} = -\begin{bmatrix} e_{xT} + e_{xR} + e_{xR+} \\ e_{yT} + e_{yR} + e_{yR+} \\ e_{zT} + e_{zR} + e_{zR+} \end{bmatrix}$$

The linear axis position correction amount calculated by Expression 16 is added to the commanded positions of the linear axes, and the rotary axis angle correction amount calculated by the rotary axis angle correction amount calculating unit 8 is added to the angle commands of the rotary axes, whereby a deviation of the tool end point position due to the linear axis dependent translation and attitude errors and the rotary axis dependent translation and attitude errors can be corrected, and also the tool attitude is corrected within a range where correction can be easily performed. The signs and units of the linear axis position correction amount and the rotary axis angle correction amount should be adequately changed in accordance with the coordinate system and unit system of the numerical control machine tool and the control device.

In the case where a position correction amount and angle correction amount which are caused by backlash correction, thermal displacement correction, or the like exist, the amounts can be used by being added to the linear axis position correction amount and the rotary axis angle correction amount in the invention.

In the linear axis dependent error storing section 4 and the rotary axis dependent error storing section 5, plural linear axis dependent translation and attitude error data, and rotary axis dependent translation and attitude error data may be stored for one numerical control machine tool, and the plural data may be interpolated. This enables error data to be set for each process area in, for example, a large machine tool, error data to be set for each ambient temperature, or each elapsed time period from the beginning of a process, or error data to be set for each movement direction.

In the method of calculating the linear axis position correction amount and the rotary axis angle correction amount in Embodiment 1 of the invention shown in Fig. 1, when the linear axis dependent error storing section 4 and the linear axis dependent position correction amount calculating unit 6 are omitted, or when all the linear axis dependent translation and attitude errors are made zero, the linear axis position correction amount and rotary axis angle correction amount with respect to only the influence due to the rotary axis dependent translation and attitude errors are calculated. Similarly, when the rotary axis dependent error storing section 5 and the rotary axis dependent position correction amount calculating unit 7 are omitted, or when all the rotary axis dependent translation and attitude errors are made zero, the linear axis position correction amount and rotary axis angle correction amount with respect to only the influence due to the linear axis dependent translation and attitude errors are calculated.

In the case where translation and attitude errors which are dependent on movement of the rotary axes are to be measured, such errors are often measured as errors with respect to the linear axes and with reference to movement of the linear axes. Therefore, in the case where an error exists in the linear axes, there arises a problem in that also errors which are dependent on movement of the linear axes are measured in a state where the errors are contained in errors which are dependent on movement of the rotary axes.

Therefore, in the numerical control device of the invention, only translation and attitude errors which are dependent on movement of the linear axes are measured and set in the linear axis dependent error storing section 4, and errors which are dependent on movement of the rotary axes are measured in a state where influence due to errors which are dependent on movement of the linear axes is corrected. According to the configuration, only errors which are dependent on movement of the rotary axes can be measured without being influenced by the errors which are dependent on movement of the linear axes, thereby attaining an effect that the linear axis position correction amount and the rotary axis angle correction amount can be more correctly calculated.

For example, there is a case where, in the rotary table type machine tool shown in Fig. 2, machining is performed while the A-axis is fixed at a predetermined angle such as 90 degrees. In this case, the direction of the rotation centerline of the C-axis is oriented in the direction of the Y-axis, and can be deemed as the B-axis which is rotated about the Y-axis. In such a case, the rotary axis angle correction amount calculating unit 8 may extract only an attitude error about the Y-axis, and set it as a rotary axis angle correction amount. This is similarly applicable also to the case where the fixation is performed at an angle other than 90 degrees.

As described above, according to the embodiment, a liner axis dependent position correction amount and rotary axis dependent position correction amount for correcting the tool end point position are calculated from translation and attitude errors which are dependent on the linear axes and translation and attitude errors which are dependent on the rotary axes, angle correction amounts of the rotary axes are calculated from a part of the attitude error, and further, a position addition correction amount for correcting a deviation of the tool end point position due to the angle correction amounts is calculated. Accordingly, while moving the tool end point position to an errorless position, the tool attitude in a direction where correction can be easily performed is kept to an errorless attitude, whereby accurate machining can be realized.

**Industrial Applicability**

The numerical control device of the invention is particularly suitable to be used as a numerical control device for correcting a mechanical error in a five-axis machine tool.

**Description of Reference Numerals and Signs**

1 table, 2 movement guiding section, 3 inclined rotary table, 4 linear axis dependent error storing section, 5 rotary axis dependent error storing section, 6 linear axis dependent position correction amount calculating unit, 7 rotary axis dependent position correction amount calculating unit, 8 rotary axis angle correction amount calculating unit, 9 position addition correction amount calculating unit, 10 spindle head, 11 tool, 12 workpiece, 13 column, 14 chuck, 15 universal head.

Claims

1. A numerical control device which numerically controls a five-axis machine tool having three linear axes and two rotary axes, the numerical control device comprising:

a rotary axis dependent position correction amount calculating unit (7) which calculates a position correction amount of a linear axis from a translation error and an attitude error that are dependent on movement of the rotary axes;
a rotary axis angle correction amount calculating unit (8) which calculates an angle correction amount of the rotary axis in which a direction of a rotation centerline is not changed by movement of the other rotary axis from a part of the attitude error that is dependent on movement of the rotary axis; and
a position addition correction amount calculating unit (9) which calculates a position correction amount of the linear axis corresponding to the angle correction amount of the rotary axis.

2. A numerical control device which numerically controls a five-axis machine tool having three linear axes and two rotary axes, the numerical control device comprising:

a linear axis dependent position correction amount calculating unit (6) which calculates a position correction amount of a linear axis from a translation error and an attitude error that are dependent on movement of the linear axis;
a rotary axis angle correction amount calculating unit (8) which calculates an angle correction amount of the rotary axis in which a direction of a rotation centerline is not changed by movement of the other rotary axis from a part of the attitude error that is dependent on movement of the linear axis; and
a position addition correction amount calculating unit (9) which calculates a position correction amount of the linear axis corresponding to the angle correction amount of the rotary axis.

3. A numerical control device which numerically controls a five-axis machine tool having three linear axes and two rotary axes, the numerical control device comprising:

a linear axis dependent position correction amount calculating unit (6) which calculates a position correction amount of a linear axis from a translation error and an attitude error that are dependent on movement of the linear axis;
a rotary axis dependent position correction amount calculating unit (7) which calculates a position correction amount of the linear axis from a translation error and an attitude error that are dependent on movement of the rotary axes;
a rotary axis angle correction amount calculating unit (8) which calculates an angle correction amount of the rotary axis in which a direction of a rotation centerline is not changed by movement of the other rotary axis from a part of the attitude error that is dependent on movement of the linear axis and a part of the attitude error that is dependent on movement of the rotary axis; and
a position addition correction amount calculating unit (9) which calculates a position correction amount of the linear axis corresponding to the angle correction amount of the rotary axis.

4. A numerical control device according to claim 3,
wherein the translation and attitude errors that are dependent on the movement of the rotary axis are measured in a state where influences due to the translation error and the attitude error that are dependent on the movement of the linear axes are corrected by the numerical control device according to claim 2.

5. A numerical control device according to any one of claims 1 to 4,
wherein the rotary axis angle correction amount calculating unit sets an angle correction amount of a rotary axis, which is mechanically clamped at a predetermined angle, to zero.

Patentansprüche

1. Numerisches Steuergerät, welches numerisch eine fünfachsige Werkzeugmaschine steuert, die drei lineare Achsen und zwei Rotationsachsen hat, wobei das numerische Steuergerät Folgendes umfasst:

eine rotationsachsenabhängige Positionskorrekturbetrags-Berechnungseinheit (7), die einen Positionskorrekturbetrag einer linearen Achse aus einem Verschiebungsfehler und einem Stellungsfehler berechnet, die von der Bewegung der Rotationsachsen abhängig sind;
eine Rotationsachsen-Winkelkorrekturbetrags-Berechnungseinheit (8), die einen Winkelkorrekturbetrag der Rotationsachse berechnet, in der eine Richtung einer Rotationsmittellinie nicht durch die Bewegung der anderen Rotationsachse verändert wird, aus einem Teil des Stellungsfehlers, der von der Bewegung der Rotationsachse abhängt; und
eine Positionszusatzkorrekturbetrags-Berechnungseinheit (9), die einen Positionskorrekturbetrag der linearen Achse berechnet, welcher dem Winkelkorrekturbetrag der Rotationsachse entspricht.

2. Numerisches Steuergerät, welches numerisch eine fünfachsige Werkzeugmaschine steuert, die drei lineare Achsen und zwei Rotationsachsen hat, wobei das numerische Steuergerät Folgendes umfasst:

eine von der linearen Achse abhängige Positionskorrekturbetrags-Berechnungseinheit (6), die einen Positionskorrekturbetrag einer linearen Achse aus einem Verschiebungsfehler und einem Stellungsfehler berechnet, die von der Bewegung der linearen Achse abhängig sind;
eine Rotationsachsen-Winkelkorrekturbetrags-Berechnungseinheit (8), die einen Winkelkorrekturbetrag der Rotationsachse berechnet, in der eine Richtung einer Rotationsmittellinie nicht durch die Bewegung der anderen Rotationsachse verändert wird, aus einem Teil des Stellungsfehlers, der von der Bewegung der linearen Achse abhängt; und
eine Positionszusatzkorrekturbetrags-Berechnungseinheit (9), die einen Pösitionskorrekturbetrag der linearen Achse berechnet, welcher dem Winkelkorrekturbetrag der Rotationsachse entspricht.

3. Numerisches Steuergerät, welches numerisch eine fünfachsige Werkzeugmaschine steuert, die drei lineare Achsen und zwei Rotationsachsen hat, wobei das numerische Steuergerät Folgendes umfasst:

eine von der linearen Achse abhängige Positionskorrekturbetrags-Berechnungseinheit (6), die einen Positionskorrekturbetrag einer linearen Achse aus einem Verschiebungsfehler und einem Stellungsfehler berechnet, die von der Bewegung der linearen Achse abhängig sind;
eine rotationsachsenabhängige Positionskorrekturbetrags-Berechnungseinheit (7), die einen Positionskorrekturbetrag der linearen Achse aus einem Verschiebungsfehler und einem Stellungsfehler berechnet, die von der Bewegung der Rotationsachsen abhängig sind;
eine Rotationsachsen-Winkelkorrekturbetrags-Berechnungseinheit (8), die einen Winkelkorrekturbetrag der Rotationsachse berechnet, in der eine Richtung einer Rotationsmittellinie nicht durch die Bewegung der anderen Rotationsachse verändert wird, aus einem Teil des Stellungsfehlers, der von der Bewegung der linearen Achse abhängt, und einem Teil Stellungsfehlers, der von der Bewegung der Rotationsachse abhängt; und
eine Positionszusatzkorrekturbetrags-Berechnungseinheit (9), die einen Positionskorrekturbetrag der linearen Achse berechnet, welcher dem Winkelkorrekturbetrag der Rotationsachse entspricht.

4. Numerisches Steuergerät nach Anspruch 3,
wobei die Verschiebungs- und Stellungsfehler, die von der Bewegung der Rotationsachse abhängig sind, in einem Zustand gemessen werden, in dem Einflüsse auf Grund des Verschiebungsfehlers und des Stellungsfehlers, die von der Bewegung der linearen Achsen abhängig sind, durch das numerische Steuergerät nach Anspruch 2 korrigiert werden.

5. Numerisches Steuergerät nach einem der Ansprüche 1 bis 4,
wobei die Rotationsachsen-Winkelkorrekturbetrags-Berechnungseinheit einen Winkelkorrekturbetrag einer Rotationsachse, die mechanisch in einem vorherbestimmten Winkel gehalten wird, auf null setzt.

**Revendications**

1. Dispositif de commande numérique qui commande numériquement une machine-outil à cinq axes ayant trois axes linéaires et deux axes rotatifs, le dispositif de commande numérique comprenant :

une unité de calcul de quantité de correction de position dépendant de l'axe rotatif (7) qui calcule une quantité de correction de position d'un axe linéaire à partir d'une erreur de translation et d'une erreur d'attitude qui dépendent d'un mouvement des axes rotatifs ;
une unité de calcul de quantité de correction d'angle d'axe rotatif (8) qui calcule une quantité de correction d'angle de l'axe rotatif dans laquelle une direction d'une ligne centrale de rotation n'est pas modifiée par un mouvement de l'autre axe rotatif à partir d'une partie de l'erreur d'attitude qui dépend d'un mouvement de l'axe rotatif ; et

une unité de calcul de quantité de correction d'addition de position (9) qui calcule une quantité de correction de position de l'axe linéaire correspondant à la quantité de correction d'angle de l'axe rotatif.

2. Dispositif de commande numérique qui commande numériquement une machine-outil à cinq axes ayant trois axes linéaires et deux axes rotatifs, le dispositif de commande numérique comprenant :

une unité de calcul de quantité de correction de position dépendant de l'axe linéaire (6) qui calcule une quantité de correction de position d'un axe linéaire à partir d'une erreur de translation et d'une erreur d'attitude qui dépendent d'un mouvement de l'axe linéaire ;

une unité de calcul de quantité de correction d'angle d'axe rotatif (8) qui calcule une quantité de correction d'angle de l'axe rotatif dans laquelle une direction d'une ligne centrale de rotation n'est pas modifiée par un mouvement de l'autre axe rotatif à partir d'une partie de l'erreur d'attitude qui dépend d'un mouvement de l'axe linéaire ; et

une unité de calcul de quantité de correction d'addition de position (9) qui calcule une quantité de correction de position de l'axe linéaire correspondant à la quantité de correction d'angle de l'axe rotatif.

3. Dispositif de commande numérique qui commande numériquement une machine-outil à cinq axes ayant trois axes linéaires et deux axes rotatifs, le dispositif de commande numérique comprenant :

une unité de calcul de quantité de correction de position dépendant de l'axe linéaire (6) qui calcule une quantité de correction de position d'un axe linéaire à partir d'une erreur de translation et d'une erreur d'attitude qui dépendent d'un mouvement de l'axe linéaire ;

une unité de calcul de quantité de correction de position dépendant de l'axe rotatif (7) qui calcule une quantité de correction de position de l'axe linéaire à partir d'une erreur de translation et d'une erreur d'attitude qui dépendent d'un mouvement des axes rotatifs ;

une unité de calcul de quantité de correction d'angle d'axe rotatif (8) qui calcule une quantité de correction d'angle de l'axe rotatif dans laquelle une direction d'une ligne centrale de rotation n'est pas modifiée par un mouvement de l'autre axe rotatif à partir d'une partie de l'erreur d'attitude qui dépend d'un mouvement de l'axe linéaire et d'une partie de l'erreur d'attitude qui dépend d'un mouvement de l'axe rotatif ; et

une unité de calcul de quantité de correction d'addition de position (9) qui calcule une quantité de correction de position de l'axe linéaire correspondant à la quantité de correction d'angle de l'axe rotatif.

4. Dispositif de commande numérique selon la revendication 3,
dans lequel les erreurs de translation et d'attitude qui dépendent du mouvement de l'axe rotatif sont mesurées dans un état où des influences dues à l'erreur de translation et à l'erreur d'attitude qui dépendent du mouvement des axes linéaires sont corrigées par le dispositif de commande numérique selon la revendication 2.

5. Dispositif de commande numérique selon l'une quelconque des revendications 1 à 4,
dans lequel l'unité de calcul de quantité de correction d'angle d'axe rotatif fixe une quantité de correction d'angle d'un axe rotatif, qui est serré mécaniquement à un angle prédéterminé, à zéro.

# FIG. 1

4

LINEAR AXIS DEPENDENT TRANSLATION ERROR/LINEAR AXIS DEPENDENT ATTITUDE ERROR STORING SECTION

5

ROTARY AXIS DEPENDENT TRANSLATION ERROR/ROTARY AXIS DEPENDENT ATTITUDE ERROR STORING SECTION

LINEAR AXIS DEPENDENT POSITION CORRECTION AMOUNT CALCULATING UNIT — 6

ROTARY AXIS DEPENDENT POSITION CORRECTION AMOUNT CALCULATING UNIT — 7

ROTARY AXIS ANGLE CORRECTION AMOUNT CALCULATING UNIT — 8

9

POSITION ADDITION CORRECTION AMOUNT CALCULATING UNIT

LINEAR AXIS POSITION CORRECTION AMOUNT

ROTARY AXIS ANGLE CORRECTION AMOUNT

FIG. 2

**FIG. 3**

ZX PLANE

ATTITUDE ERROR

ROTARY AXIS ANGLE CORRECTION AMOUNT

10

13

B

COMMAND POSITION X

TOOL VECTOR $X_t$

11

14

X

Z

C

12

ROTATION CENTER POSITION $X_c$

TOOL END POINT POSITION $X_p$

XY PLANE

13

ATTITUDE ERROR

10

B

COMMAND POSITION X

TOOL VECTOR $X_t$

11

C

TOOL END POINT POSITION $X_p$

X

Y

14

12

ROTATION CENTER POSITION $X_c$

ROTARY AXIS ANGLE CORRECTION AMOUNT

FIG. 4

FIG. 5

# FIG. 6

Z    Z'

ROTATION
CENTERLINE
OF C-AXIS

MOVEMENT AXIS
OF Z-AXIS

3

ROTATION CENTERLINE
OF C-AXIS

X

ROTATION CENTERLINE
OF A-AXIS

C

A

SQUARENESS AND INCLINATION OF
CENTERLINE OF ROTARY AXIS

C

A

ROTATION CENTERLINE
OF A-AXIS

ATTITUDE ERROR DEPENDENT
ON ROTARY AXIS

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4038185 B

- JP 4327894 B